# EUROPÄISCHE PATENTSCHRIFT

(11) **EP 4 522 467 B1**
(45) Veröffentlichungstag und Bekanntmachung des Hinweises auf die Patenterteilung: **22.04.2026**
(21) Anmeldenummer: 23724248.2
(22) Anmeldetag: 02.05.2023
(51) Int. Cl.: B60T 1/087, B60T 13/68, B60T 11/28, B60T 10/02

(54) **STEUERLUFTSYSTEM FÜR EINEN HYDRODYNAMISCHEN RETARDER**
CONTROL AIR SYSTEM FOR A HYDRODYNAMIC RETARDER
SYSTÈME D'AIR DE COMMANDE POUR UN RETARDATEUR HYDRODYNAMIQUE

(30) Priorität: 12.05.2022 DE 102022111889
(43) Veröffentlichungstag der Anmeldung: 19.03.2025
(73) Patentinhaber: Voith Patent GmbH, 89522 Heidenheim (DE); Norgren GmbH, 46519 Alpen (DE)
(72) Erfinder: WASSERMANN, Mirco, 74544 Michelbach an der Bilz (DE); SACHS, Christoph, 70372 Stuttgart (DE); DEDERER, Alexander, 73666 Baltmannsweiler (DE)
(74) Vertreter: Voith Patent GmbH - Patentabteilung
(86) Internationale Anmeldenummer: PCT/EP2023/061499
(87) Internationale Veröffentlichungsnummer: WO 2023/217576

(56) Entgegenhaltungen:
- WO-A1-2021/121947
- DE-A1- 102007 014 238
- DE-A1- 102020 114 601

## Beschreibung

Die Erfindung betrifft ein Steuerluftsystem zur Bereitstellung von Druckluft mit einem einstellbaren Luftdruck an einem Regeldruckanschluss, zur Steuerung des Bremsmomentes eines hydrodynamischen Retarders gemäß dem Oberbegriff des Patentanspruchs 1 sowie ein Verfahren zur Steuerung eines Steuerluftsystems mittels einer Steuerung gemäß dem Oberbegriff des Anspruchs 9.

In einem Kraftfahrzeug ist das Steuerluftsystem für den hydrodynamischen Retarder in der Regel an das Druckluftsystem des Kraftfahrzeugs angeschlossen. Das Druckluftsystem kann beispielsweise die Druckluftversorgung für das Bremsluftsystem des Kraftfahrzeugs sein.

Zur Steuerung des Bremsmomentes mittels des Steuerluftsystems gehört neben der Regelung des Druckluftaufbaus auch die Regelung des Druckluftabbaus, so dass die Bremsleistung des Retarders geregelt erhöht und verringert werden kann.

Für den Druckabbau ist das Auslassventil eines Steuerluftsystems vorgesehen, wobei der Steuerluftdruck im Bedarfsfall durch definiertes Öffnen und Schließen des Auslassquerschnittes absenkbar ist. Dabei öffnet das Auslassventil immer dann vollständig und dauerhaft, wenn der Luftraum möglichst schnell entlüftet werden soll. Zudem muss die Möglichkeit gegeben sein den Luftraum vollständig zu Entlüften.

Für beide Funktionen ist eine schnelle und gut regelbare Regelung gewünscht, die mit bekannten Steuerluftsystemen nur bedingt zu erreichen ist. So sind aus dem StdT unterschiedlich aufgebaute Steuerluftsysteme und Verfahren zur Regelung, Überwachung und Funktionskontrolle bekannt.

Die DE 199 29 152 A1 offenbart beispielsweise ein Steuerluftsystem mit Proportionalventileinrichtung zur Steuerung des Bremsmomentes eines Retarders.

DE 10 2011 106 522 B3 beschreibt ein Steuerluftsystem und ein Verfahren zur Steuerung eines hydrodynamischen Retarders mittels eines Steuerluftsystems. Zur Steuerung des hydrodynamischen Retarders ist ein Luftraum vorgesehen, der über das Steuerluftsystem mit Druckluft befüll- oder entleerbar ist, so dass im Luftraum ein gewünschter Steuerluftdruck eingestellt ist. Der Steuerluftdruck wird mittels eines Sensors erfasst, der zwischen einem Einlassventil und einem Auslassventil angeordnet ist. Die Funktionsfähigkeit des Einlassventils und des Auslassventils wird durch vorgegebene Schaltfolgen allein mittels des durch den Sensor erfassten Steuerluftdruckes festgestellt.

Weiterhin wird in der DE 10 2014 201 750 A1 ein Verfahren zur Überwachung eines Versorgungsdruckes in einem pneumatischen oder hydraulischen Drucksystem beschrieben.

In beiden Schriften wird ein System offenbart, bei dem zum Schnellentlüften des Luftraums sowohl das Einlassventil als auch das Auslassventil jeweils in seine geöffnete Schaltstellung geschaltet wird. Zugleich wird das vorgeschaltete Einlassventil in seine Ruheschaltung geschaltet, so dass Steuerluft aus dem Luftraum sowohl über das Auslassventil als auch über das Einlassventil und das vorgeschaltete Einlassventil in die Umgebung gelangt.

Aus der DE 10 2020 114 601 A1 ist ein weiteres Steuerluftsystem bekannt. Hier ist in dem Regelkanal ein Umschaltventil vorgesehen, über das eine Verbindung zwischen Regelkanal und Entlüftungskanal herstellbar ist. Um eine unbeabsichtigte Umschaltung zu verhindern, ist eine Bypassleitung zur Überbrückung des Umschaltventils notwendig, welche ein Schalten des Umschaltventils in den Schnellentlüftungsbetrieb verhindert.

Aus der DE 10 2019 128 921 A1 ist eine Ventilanordnung bekannt die eine Schnellentlüftung über einen Bypass ermöglicht.

Aus der DE 10 2005 050 480 A1 ist ein weiteres Steuerluftsystem bekannt, um das Bremsmoment eines Retarders einzustellen. Über ein Absperrventil und ein Rückschlagventil wird der Druckluftanschluss freigeschaltet, so dass in einem ersten Schritt ein Umschaltventil geschaltet wird, wodurch der Arbeitsmediumkreislauf durch den Retarder freigeschaltet wird. Die Retarderregelung zur Einstellung des Bremsmomentes erfolgt über das Einlassventil und das Auslassventil. Wobei das Rückschlagventil zwischen Einschaltventil und Absperrventil angeordnet ist, so dass eine Entlüftung über das Einlassventil und das Rückschlagventil nur erfolgen kann, nachdem das Absperrventil und Einlassventil geschlossen wurden. Zur schnelleren Entlüftung kann bei geschlossenem Absperrventil zusätzlich das Einlassventil wieder geöffnet werden, wodurch neben der Entlüftung über das Auslassventil eine Entlüftung über das Rückschlagventil erfolgen kann. Das Umschalten verzögert die Schnellentlüftung.

Die Aufgabe der Erfindung ist es, einen alternativen Aufbau für ein Steuerluftsystem vorzuschlagen, mit welchem die Funktionalität des Steuerluftsystems verbessert werden kann.

Die Aufgabe wird erfindungsgemäß durch eine Ausführung entsprechend dem unabhängigen Anspruch 1 gelöst. Weitere vorteilhafte Ausführungsformen der vorliegenden Erfindung finden sich in den Unteransprüchen.

Es wird erfindungsgemäß ein Steuerluftsystem vorgeschlagen, aufweisend einen Entlüftungskanal, der mit einem Entlüftungsanschluss verbunden ist, einen Druckregelkanal, der mit dem Regeldruckanschluss verbunden ist, einen Druckkanal, mit mehreren Abschnitten, der mit einem Druckluftanschluss verbindbar ist und ein Umschaltventil, über das in einer ersten Schaltstellung eine Verbindung zwischen Druckregelkanal und Entlüftungskanal und in einer zweiten Schaltstellung eine Verbindung zwischen Druckregelkanal und Druckkanal schaltbar ist.

Erfindungsgemäß wird vorgeschlagen, dass in dem Druckkanal ein Boosterventil vorgesehen ist, mittels dem das Umschaltventil von der ersten in die zweite Schaltstellung schaltbar ist. Dadurch ist sichergestellt, dass das Umschaltventil erst umschaltet, wenn diese Umschaltung von der Steuerung des Steuerluftsystems erforderlich ist.

Weiterhin kann vorgesehen sein, dass das Boosterventil pneumatisch betätigbar ist.

Erfindungsgemäß ist der Druckkanalabschnitt zwischen Boosterventil und Umschaltventil in der Grundstellung des Boosterventils über einen Bypasskanal mit dem Entlüftungskanal verbunden.

Dadurch erfolgt die Entlüftung des Druckkanalabschnittes, was die Druckdifferenz in Umschaltventil jederzeit derart vergrößert, dass eine Umschaltung erfolgt, die eine Verbindung zwischen Druckregelkanal und Entlüftungskanal freischaltet.

Vorteilhafterweise ist das Boosterventil über ein Pilotventil von der Grundstellung in die Schaltstellung schaltbar, wobei die Rückschaltung beispielsweise mittels einer Feder oder anderer bekannter Mittel erfolgen kann.

Weiterhin ist es vorteilhaft, wenn ein elektrisch ansteuerbares Einlassventil vorgesehen wird, dass dem Boosterventil, im Druckkanal, vorgeschaltet ist. Dadurch kann der Durchfluss der Druckluft vorteilhaft geregelt werden, wenn z.B. der Retarder für den Bremsbetrieb mehr Druckluft benötigt.

In einer bevorzugten Ausführung können mindestens zwei unabhängig ansteuerbare Einlassventile vorgesehen sein, die dem Boosterventil, im Druckkanal, vorgeschaltet sind. Diese können unterschiedliche Nennweiten aufweisen. So wird die Regelbarkeit des Retarders verbessert.

Zwischen Druckregelkanal und Entlüftungskanal kann weiterhin ein Druckregelkanal mit einem Druckbegrenzungsventil angeordnet sein. Durch die Druckbegrenzung wird sichergestellt, dass das Bremsmoment nicht zu groß wird. Weiterhin kann es gezielt reduziert werden.

Weiterhin kann zwischen Druckregelkanal und Entlüftungskanal ein Auslasskanal mit einem Auslassventil angeordnet sein. Dieses separat ansteuerbare Auslassventil stellt eine Entlüftung sicher, wenn es nicht angesteuert wird, so dass eine Entlüftung im Nicht-Bremsbetrieb sichergestellt ist.

Ein erfindungsgemäßes Verfahren nach Anspruch 9 sieht vor, dass das Umschaltventil mittels einer Steuerung geregelt wird, wobei die Schaltung des Umschaltventils von der ersten in die zweite Schaltstellung mittels des Boosterventils, im Druckkanal, erfolgt.

Weiterhin ist zur Regelung der Druckluftzufuhr vorgesehen, dass zumindest ein Einlassventil vorhanden ist, wobei dieses derart geschaltet wird, dass ein von der Steuerung vorgegebener Druck am Drucksensor 18 anliegt.

Zur Regelung des Druckabbaus, also zur Einstellung eines von der Steuerung vorgegebenen niedrigeren Drucks am Sensor (18), kann das Umschaltventil und/oder das Auslassventil geschaltet werden. Dadurch ist auch ein sehr schnellerer Druckabbau im Regelbetrieb eines Retarders möglich.

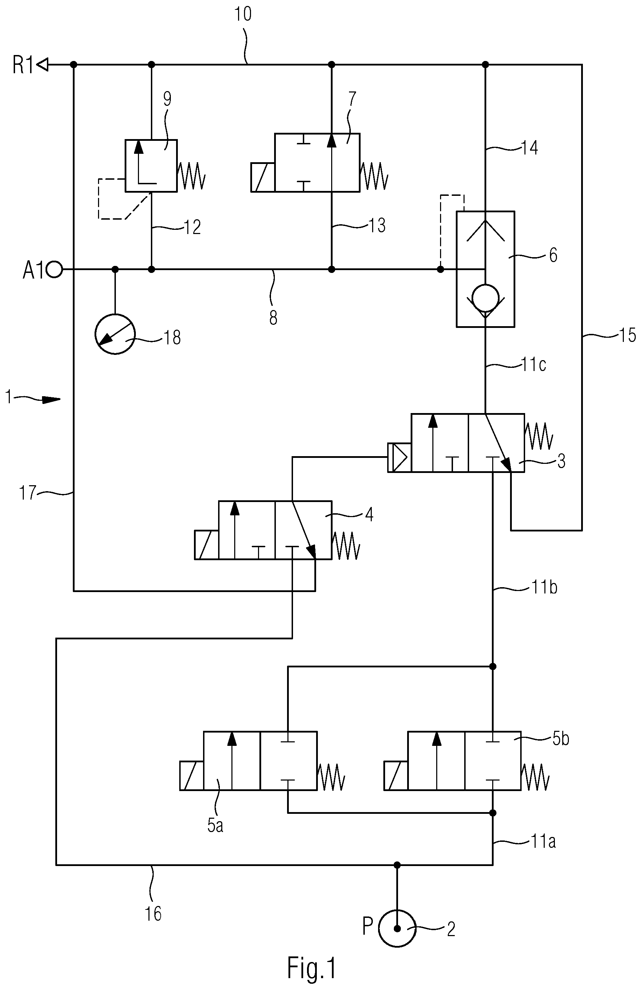

Im Folgenden wird die Erfindung anhand eines Blockschaltbildes, Figur 1, näher erläutert.

Figur 1 zeigt eine mögliche Ausführung eines erfindungsgemäßen Steuerluftsystems 1. Das Steuerluftsystem 1 kann auch als pneumatische Steuerungsvorrichtung bezeichnet werden. Mit Hilfe des Steuerluftsystems 1 kann beispielsweise ein hydrodynamischer Retarder geregelt werden, der einen Öltank mit einem Luftraum aufweist. Der Luftdruck im Luftraum wird mittels des Steuerluftsystems 1 geregelt, so dass das Öl aus dem Öltank in den Arbeitsraum des Retarders gefördert wird, wie es aus dem StdT allgemein bekannt ist. *Das Steuerluftsystem wird von einer nicht dargestellten Steuerung gesteuert und geregelt, an die die Ventile und Sensoren angeschlossen sind.*

Die Be- und Entlüftung des Luftraums erfolgt über den Regeldruckanschluss A1 des Steuerdrucksystems 1. Dabei ist der Regelanschluss A1 über das Steuerdrucksystem 1 mit einem Druckluftanschluss 2 oder mit einem Entlüftungsanschluss R1 druckluftleitend verbindbar. Um die Be- und Entlüftung zu regeln, umfasst das Steuerdrucksystem mehrere Elemente zur Schaltung der Druckluftverhältnisse.

Die Funktionalität des Steuerdrucksystems umfasst drei wesentliche Betriebszustände, den Druckaufbau, die Druckregelung und den Druckabbau am Regelanschluss A1, wobei die Messung des aktuell anliegenden Drucks mittels des Drucksensors 18 im Druckregelkanal 8 unmittelbar hinter dem Regeldruckanschluss A1 gemessen wird.

Damit der Druckaufbau, z.B. die Schaltung des Retarders in den Bremsbetrieb, erfolgen kann, muss zumindest eines der elektrisch ansteuerbaren Einlassventile 5a und/oder 5b geschaltet werden, so dass Druckluft am Boosterventil 3 anliegt. Mit der elektrischen Ansteuerung des Pilotventils 4 wird das Boosterventil 3 dann pneumatisch geschaltet, so dass Druckluft vom Druckluftanschluss 2 durch die Druckkanalabschnitte 11a, b zum Boosterventil 3 und dem Druckkanalabschnitt 11c schließlich zum Umschaltventil 6 gelangt. Das Umschaltventil 6 ist mit dem Druckkanal 11a, b, c dem Druckregelkanal 8 und dem Entlüftungskanal 10 gekoppelt.

In einer bevorzugten Ausführung ist das Umschaltventil 6 ein Schnellentlüftungsventil, das auf Basis von Druckdifferenzen, ohne zusätzliche Betätigungsmittel, schaltet. Alternativ könnte auch ein zwangsbetätigtes Ventil eingesetzt werden. Je nach vorliegenden Druckdifferenzen zwischen Regelanschluss A1, Druck im Druckkanalabschnitt 11c und Entlüftungsanschluss R1 wird das Umschaltventils 6 in eine seiner beiden Schaltstellungen geschaltet.

Bei geschaltetem Boosterventil 3 bewirken die Druckverhältnisse am Umschaltventil 6, dass eine Verbindung zwischen den Druckkanalabschnitt 11c und Druckregelkanal 8 über das Umschaltventil 6 freigegeben wird. Die Nachschaltung des Boosterventils 3 hinter die Einlassventile 5a, 5b minimiert die Verzögerung beim Einschalten, da der Versorgungsdruck über die Einlassventile 5a, 5b vorab einstellbar ist.

Der Druckregelkanal 8 ist weiterhin über zwei weitere schaltbare Verbindungen mit dem Entlüftungskanal 10 verbunden. Die erste Verbindung wird durch den Steuerkanal 12 gebildet, in dem das Druckbegrenzungsventil 9 angeordnet ist. Mittels des Druckbegrenzungsventils 9 kann der Druck am Regelanschluss geregelt reduziert werden.

Die zweite zusätzliche Verbindung zwischen Druckregelkanal 8 und Entlüftungskanal 10 bildet der Auslasskanal 13, in dem das elektrisch schaltbare Auslassventil 7 angeordnet ist, welches in der Grundstellung die Verbindung zwischen Druckregelkanal 8 und Entlüftungskanal 10 frei gibt, so dass im nicht Bremsbetrieb sichergestellt ist, dass kein Druck am Regeldruckanschluss A1 anliegt. Der Öltank ist dadurch drucklos, so dass die Verlustleistung des Retarders minimiert wird.

Im Druckregelbetrieb, dem Retarderregelbetrieb, kommt das Druckbegrenzungsventil 9, zur Druckreduzierung, und die elektrisch ansteuerbaren Einlassventile 5a und 5b, zur Druckerhöhung, zum Einsatz. Zur besseren Regelung der Druckerhöhung sind die Einlassventile 5a, 5b parallel zueinander geschaltet und können weiterhin unterschiedliche Nennweiten aufweisen. Beim Einschalten wird so sichergestellt, dass ein schneller Druckaufbau erfolgen kann, wobei gleichzeitig auch eine feinere Regelung, durch die einzelne Aktivierung der Einlassventile 5a, 5b, umsetzbar ist.

Der Druckabbau oder die Schaltung des Retarders in den Nichtbremsbetrieb, wird dadurch erreicht, dass das Pilotventil 4 in die Ruheschaltung geschaltet wird, so dass auch das Boosterventil 3 in die Ausgangsstellung schaltet, wodurch der Regeldruckanschluss A1 über den Bypasskanal 15 mit dem Entlüftungsanschluss R1 luftleitend verbunden wird. Die dabei einstehende Druckdifferenzen zwischen dem Druck in dem Druckregelkanal 8 und dem Druck in dem Schnellentlüftungskanal 14, bewirkt ein Umschalten des Umschaltventils 6, so dass schließlich eine Schnellentlüftung über das Umschaltventil 6 erfolgt. Das Pilotventil 4 wirkt wie ein Schalter auf das Umschaltventil 6, so dass dieses parallel zur Schaltung des Pilotventils 4 geschaltet wird.

Das Umschaltventil 6 kann beispielsweise als Membranventil ausgeführt sein, wobei die Bewegung der Membran minimal gehalten werden kann, da der Druckabbau im Wesentlichen über den Bypasskanal 15 erfolgt.

Durch die vorteilhafte Schaltbarkeit des Umschaltventils 6 kann dieses auch zum Druckabbau im Regelbetrieb eingesetzt werden. So z. B. wenn der erforderliche Druck sehr schnell etwas abgesenkt werden muss, ohne das System vollständig zu Entlüften.

Die Anordnung der Ventile 3, 4, 5, 6, 7, 9 zueinander und Anordnung des Drucksensors 18 erlaubt für alle Ventile eine Ventildiagnose zur Detektion der jeweiligen Funktionsfähigkeit, da jedes Ventil für sich eine Druckänderung hervorrufen kann, die direkt vom Drucksensor 18 zu erfassbar ist.

Das Boosterventil 3 kann auch als elektrisch angesteuertes Ventil ausgeführt sein, so dass das Pilotventil 4 entfallen kann. Denkbar ist auch eine Kombination von Boosterventil 3 und das Umschaltventil 6, das als elektrisch/pneumatisches Ventil ausgelegt ist.

## Patentansprüche

1. Steuerluftsystem (1) zur Steuerung des Bremsmomentes eines hydrodynamischen Retarders, mittels dem Druckluft mit einem einstellbaren Luftdruck an einem Regeldruckanschluss (A1) bereitstellbar ist, aufweisend
- einen Entlüftungskanal (10), der mit einem Entlüftungsanschluss (R1) verbunden ist,
- einen Druckregelkanal (8), der mit dem Regeldruckanschluss (A1) verbunden ist,
- einen Druckkanal (11a, b, c), mit mehreren Abschnitten, der mit einem Druckluftanschluss (2) verbindbar ist und
- einem Umschaltventil (6), über das in einer ersten Schaltstellung eine Verbindung zwischen Druckregelkanal (8) und Entlüftungskanal (10) und in einer zweiten Schaltstellung eine Verbindung zwischen Druckregelkanal (8) und Druckkanal (11a, b, c) schaltbar ist,
**dadurch gekennzeichnet, dass**
in dem Druckkanal (11a, b, c) ein Boosterventil (3) vorgesehen ist, das von einer Grundstellung in eine Schaltstellung schaltbar ist, wobei ein Druckkanalabschnitt (11c) zwischen Umschaltventil (6) und Boosterventil (3) vorgesehen ist,
wobei über das Boosterventil (3) in seiner Schaltstellung eine Verbindung zwischen Druckluftanschluss (2) und Druckkanalabschnitt (11c) herstellbar ist, so dass das Umschaltventil (6) in die zweite Schaltstellung schaltbar ist, und
wobei über das Boosterventil (3) in seiner Grundstellung der Druckluftkanalabschnitt (11c) über einen Bypasskanal (15) mit dem Entlüftungskanal (10) verbunden ist, so dass das Umschaltventil in die erste Schaltstellung schaltbar ist.

2. Steuerluftsystem (1) nach Anspruch 1,
**dadurch gekennzeichnet, dass**
das Boosterventil (3) pneumatisch betätigbar ist.

3. Steuerluftsystem (1) nach Anspruch 2,
**dadurch gekennzeichnet, dass**
das Boosterventil (3) über ein Pilotventil (4) von der Grundstellung in die Schaltstellung schaltbar ist.

4. Steuerluftsystem (1) nach Anspruch 3,
**dadurch gekennzeichnet, dass**
ein elektrisch ansteuerbares Einlassventil (5a, b) vorgesehen ist, dass dem Boosterventil (3), im Druckkanal (11a, b), vorgeschaltet ist.

5. Steuerluftsystem (1) nach Anspruch 1,
**dadurch gekennzeichnet, dass**
mindestens zwei unabhängig ansteuerbare Einlassventile (5a, b) vorgesehen sind, die dem Boosterventil (3), im Druckkanal (11a, b), vorgeschaltet sind.

6. Steuerluftsystem (1) nach Anspruch 5,
**dadurch gekennzeichnet, dass**
die Einlassventile (5a, b) unterschiedliche Nennweiten aufweisen.

7. Steuerluftsystem (1) nach Anspruch 1
**dadurch gekennzeichnet, dass**
zwischen Druckregelkanal (8) und Entlüftungskanal (10) ein Druckregelkanal (12) mit einem Druckbegrenzungsventil (9) angeordnet ist.

8. Steuerluftsystem (1) nach Anspruch 1
**dadurch gekennzeichnet, dass**
zwischen Druckregelkanal (8) und Entlüftungskanal (10) ein Auslasskanal (13) mit einem Auslassventil (7) angeordnet ist.

9. Verfahren zur Steuerung eines Steuerluftsystems (1) nach einem der Ansprüche 1-8
**dadurch gekennzeichnet, dass**
die Schaltung des Umschaltventils (6) von der ersten in die zweite Schaltstellung mittels des Boosterventils (3), im Druckkanal (11a, b, c), erfolgt.

10. Verfahren nach Anspruch 9
**dadurch gekennzeichnet, dass**
zur Regelung der Druckluftzufuhr zumindest ein Einlassventil (5a, b) vorgesehen ist, wobei dieses derart geschaltet wird, dass ein von der Steuerung vorgegebener Druck am Drucksensor 18 anliegt.

11. Verfahren nach Anspruch 9
**dadurch gekennzeichnet, dass**
zur Einstellung eines von der Steuerung vorgegebenen niedrigeren Drucks am Sensor (18) das Umschaltventil (6) und/oder das Auslassventil (7) geschaltet wird.

## Claims

1. Control air system (1) for controlling the braking torque of a hydrodynamic retarder, by means of which compressed air with an adjustable air pressure can be provided at a regulating pressure connection (A1), comprising
- a venting channel (10) which is connected to a venting connection (R1),
- a pressure regulating channel (8) which is connected to the regulating pressure connection (A1),
- a pressure channel (11a, b, c), having a plurality of sections, which can be connected to a compressed-air connection (2), and
- a switchover valve (6) by means of which a connection between the pressure regulating channel (8) and the venting channel (10) can be switched in a first switching position and a connection between the pressure regulating channel (8) and the pressure channel (11a, b, c) can be switched in a second switching position,
**characterized in that**
a booster valve (3) is provided in the pressure channel (11a, b, c) and can be switched from a basic position to a switching position, wherein a pressure channel section (11c) is provided between the switchover valve (6) and the booster valve (3),
wherein a connection between the compressed-air connection (2) and the pressure channel section (11c) can be established via the booster valve (3) in its switching position, so that the switchover valve (6) can be switched to the second switching position, and
wherein the compressed-air channel section (11c) is connected to the venting channel (10) via a bypass channel (15) via the booster valve (3) in its basic position, so that the switchover valve can be switched to the first switching position.

2. Control air system (1) according to Claim 1, **characterized in that**
the booster valve (3) can be pneumatically actuated.

3. Control air system (1) according to Claim 2, **characterized in that**
the booster valve (3) can be switched from the basic position to the switching position via a pilot valve (4).

4. Control air system (1) according to Claim 3, **characterized in that**
an electrically controllable inlet valve (5a, b) is provided, which is connected upstream of the booster valve (3) in the pressure channel (11a, b).

5. Control air system (1) according to Claim 1, **characterized in that**
at least two independently controllable inlet valves (5a, b) are provided, which are connected upstream of the booster valve (3) in the pressure channel (11a, b).

6. Control air system (1) according to Claim 5, **characterized in that**
the inlet valves (5a, b) have different nominal widths.

7. Control air system (1) according to Claim 1, **characterized in that**
a pressure regulating channel (12) with a pressure limiting valve (9) is arranged between the pressure regulating channel (8) and the venting channel (10).

8. Control air system (1) according to Claim 1, **characterized in that**
an outlet channel (13) with an outlet valve (7) is arranged between the pressure regulating channel (8) and the venting channel (10).

9. Method for controlling a control air system (1) according to any of Claims 1-8,
**characterized in that**
the switchover valve (6) is switched from the first to the second switching position by means of the booster valve (3) in the pressure channel (11a, b, c).

10. Method according to Claim 9,
**characterized in that**
at least one inlet valve (5a, b) is provided for regulating the compressed-air supply, wherein the inlet valve is switched in such a way that a pressure specified by the controller is applied to the pressure sensor (18).

11. Method according to Claim 9,
**characterized in that**
the switchover valve (6) and/or the outlet valve (7) are/is switched for setting a lower pressure, specified by the controller, at the sensor (18).

## Revendications

1. Système d'air de commande (1) pour la commande du couple de freinage d'un ralentisseur hydrodynamique, au moyen duquel de l'air comprimé peut être mis à disposition avec une pression d'air réglable à un raccord de pression de régulation (A1), comprenant
- un canal d'aération (10), qui est relié à un raccord d'aération (R1),
- un canal de régulation de pression (8), qui est relié au raccord de pression de régulation (A1),
- un canal de pression (11a, b, c), comportant plusieurs sections, qui peut être relié à un raccord d'air comprimé (2) et
- une soupape de commutation (6), par l'intermédiaire de laquelle, dans une première position de commutation, une connexion entre le canal de régulation de pression (8) et le canal d'aération (10) et, dans une deuxième position de commutation, une connexion entre le canal de régulation de pression (8) et le canal de pression (11a, b, c) peut être établie,
**caractérisé en ce que**
dans lequel une soupape de suralimentation (3) est prévue dans le canal de pression (11a, b, c), laquelle peut être commutée d'une position de base vers une position de commutation, une section de canal de pression (11c) étant prévue entre la soupape de commutation (6) et la soupape de suralimentation (3),
dans lequel, au moyen de la soupape de suralimentation (3) dans sa position de commutation, une connexion entre le raccord d'air comprimé (2) et la section de canal de pression (11c) peut être établie, de sorte que la soupape de commutation (6) peut être commutée dans la deuxième position de commutation, et
dans lequel, au moyen de la soupape de suralimentation (3) dans sa position de base, la section de canal de pression d'air comprimé (11c) est reliée au canal d'aération (10) via un canal de dérivation (15), de sorte que la soupape de commutation peut être commutée dans la première position de commutation.

2. Système d'air de commande (1) selon la revendication 1,
**caractérisé en ce que**
la soupape de suralimentation (3) peut être actionnée pneumatiquement.

3. Système d'air de commande (1) selon la revendication 2,
**caractérisé en ce que**
la soupape de suralimentation (3) peut être commutée de la position de base à la position de commutation par l'intermédiaire d'une soupape pilote (4).

4. Système d'air de commande (1) selon la revendication 3,
**caractérisé en ce que**
une soupape d'admission (5a, b) à commande électrique est prévue, qui montée en amont de la soupape de suralimentation (3) dans le canal de pression (11a, b).

5. Système d'air de commande (1) selon la revendication 1,
**caractérisé en ce que**
au moins deux soupapes d'admission (5a, b) pouvant être commandées indépendamment sont montées en amont de la soupape de suralimentation (3) dans le canal de pression (11a, b).

6. Système d'air de commande (1) selon la revendication 5,
**caractérisé en ce que**
les soupapes d'admission (5a, b) présentent des largeurs nominales différentes.

7. Système d'air de commande (1) selon la revendication 1,
**caractérisé en ce que**
un canal de régulation de pression (12) pourvu d'une soupape de limitation de pression (9) est disposé entre le canal de régulation de pression (8) et le canal d'aération (10).

8. Système d'air de commande (1) selon la revendication 1,
**caractérisé en ce que**
un canal de sortie (13) avec une soupape de sortie (7) est disposé entre le canal de régulation de pression (8) et le canal d'aération (10).

9. Procédé de commande d'un système d'air de commande (1) selon l'une des revendications 1 à 8
**caractérisé en ce que**
la soupape de commutation (6) est commutée de la première à la deuxième position de commutation au moyen de la soupape de suralimentation (3), dans le canal de pression (11a, b, c).

10. Procédé selon la revendication 9,
**caractérisé en ce que**
au moins une soupape d'admission (5a, b) est prévue pour réguler l'alimentation en air comprimé, ladite soupape d'admission étant commutée de telle sorte qu'une pression prédéfinie par la commande soit présente au niveau du capteur de pression (18).

11. Procédé selon la revendication 9,
**caractérisé en ce que**
pour régler une pression plus basse prédéfinie par la commande au niveau du capteur (18), la soupape de commutation (6) et/ou la soupape de sortie (7) sont commutées.
